# EUROPEAN PATENT APPLICATION

(11) **EP 1 453 316 A2**
(43) Date of publication of application: **01.09.2004**
(21) Application number: 04000519.1
(22) Date of filing: 13.01.2004
(51) Int. Cl.: H04N 7/16

(54) **information processing apparatus and display control method**

(30) Priority: 16.01.2003 JP 2003008144
(71) Applicant: Kabushiki Kaisha Toshiba, Tokyo (JP)
(72) Inventor: Ogawa, Takehiro Kabushiki Kaisha Toshiba, 1-chome Minato-ku Tokyo 105-8001 (JP); Nakamura, Seiichi Kabushiki Kaisha Toshiba, 1-chome Minato-ku Tokyo 105-8001 (JP); Hirabayashi, Hirotada Kabushiki Kaisha Toshiba, 1-chome Minato-ku Tokyo 105-8001 (JP); Baba, Kunio Kabushiki Kaisha Toshiba, 1-chome Minato-ku Tokyo 105-8001 (JP)
(74) Representative: Henkel, Feiler & Hänzel

(57) **Abstract**

A display control method includes displaying a plurality of saved files and a plurality of folders representing categories which classify the plurality of files on a window (5a), causing to select one of the plurality of displayed folders, and clearing the plurality of folders and the plurality of files which are displayed, and displaying a plurality of other folders as selective candidates in a category represented by a selected folder and the plurality of files (5b), when one of the plurality of displayed folders is selected.

## Description

The present invention relates to an information processing apparatus and a display control method for displaying a screen used to operate contents.

In recent years, contents such as video data, music data, photo data, and the like are often handled on the screen of a personal computer. The respective contents are normally saved in a file format by a specific application. In this case, the files of the contents are often saved in a tree structure (hierarchical structure).

The application can display a tree structure which contains a plurality of items that represent various categories, so as to allow the user to see individual information (title name and the like) of the saved contents. The user makes selection by designating items as candidates one by one from the upper layer to the lower layer of the displayed tree structure, and can reach information (title name and the like) of desired contents.

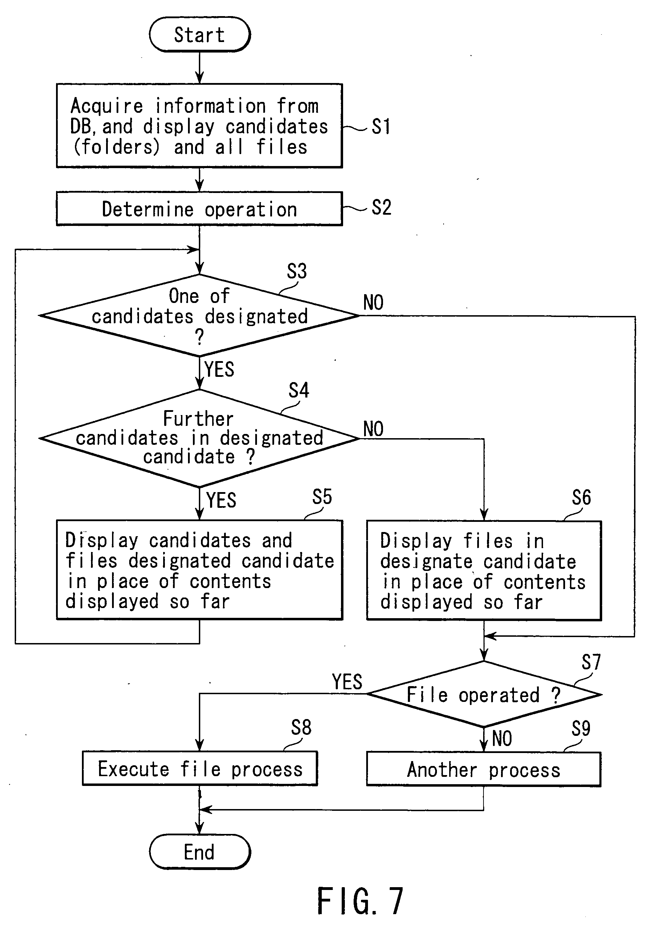

As the display format, an icon display is used in addition to the aforementioned tree structure. For example, Jpn. Pat. Appln. KOKAI Publication No. 8-016612 (e.g., FIG. 6) discloses that the icon display is applied to display of directories.

However, it is difficult in the displayed tree structure to identify items to be selected in terms of its structure. For this reason, the user cannot often identify objects to be selected by himself or herself.

In the icon display format disclosed in the above reference, each icon simply represents an icon that indicates data or a program itself, and does not represent a category used to classify individual contents. Such simple icon display cannot help the user select target contents information.

Embodiments of the present invention may provide an information processing apparatus and a display control method, capable of improving usability in selecting target contents information.

According to one aspect of the present invention, there is provided an information processing apparatus, comprising means for displaying a plurality of saved files and a plurality of folders representing categories which classify the plurality of files on a window; means for selecting one of the plurality of displayed folders; means for clearing the plurality of folders and the plurality of files which are displayed; and means for displaying a plurality of another folders as selective candidates in a category represented by a selected folder and the plurality of files.

According to another aspect of the present invention, there is provided a display control method, comprising displaying a plurality of saved files and a plurality of folders representing categories which classify the plurality of files on a window; causing to select one of the plurality of displayed folders; and clearing the plurality of folders and the plurality of files which are displayed, and displaying a plurality of other folders as selective candidates in a category represented by a selected folder and the plurality of files, when one of the plurality of displayed folders is selected.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the arrangement of a home network system using an information processing apparatus according to an embodiment of the present invention;
FIG. 2 is a block diagram showing the arrangement of a wireless AV station;
FIG. 3 is a block diagram showing the arrangement of each information processing apparatus serving as a client;
FIG. 4 shows the configuration of a media library stored in a storage medium of the information processing apparatus;
FIG. 5 shows a contents operation window displayed on a display monitor of the information processing apparatus;
FIG. 6 is a block diagram showing the functional arrangement of GUI control software used to control GUI-related parts on the contents operation window; and
FIG. 7 is a flow chart showing the operation of the GUI control software of the embodiment.

Embodiments of the present invention will be described below with reference to the drawings.

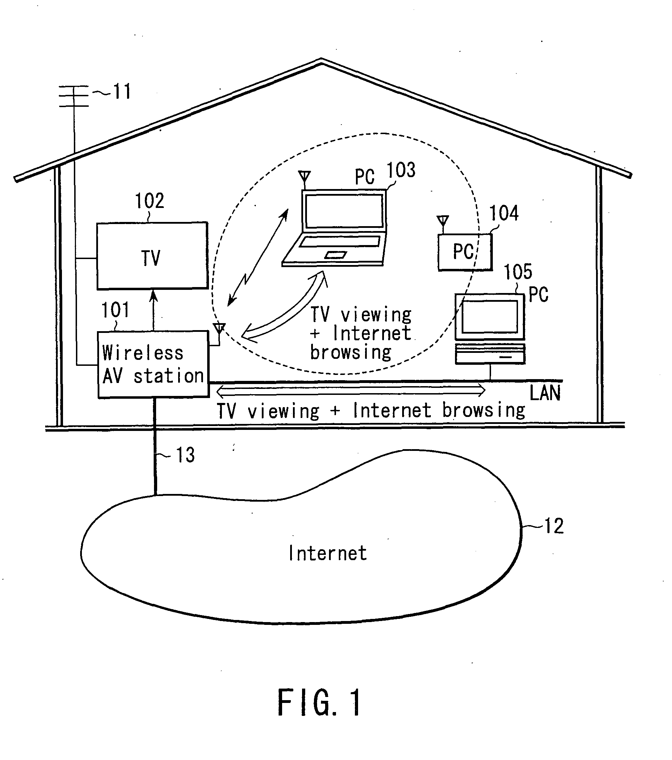

FIG. 1 shows the arrangement of a home network system using an information processing apparatus according to an embodiment of the present invention.

This home network system includes a wireless AV (audio/video) station 101, TV receiver 102, notebook type personal computers 103 and 104, desktop type personal computer 105, and the like.

The wireless AV station 101 serves as a home network server. This wireless AV station 101 provides services associated with viewing of broadcast program data of the TV or the like, Internet browsing, and the like to information processing apparatuses such as the personal computers 103 to 105 and the like via a wireless or wired network in the house.

The wireless AV station 101 is connected to an external global network (external network) such as the Internet 12 or the like via a communication line 13 such as an ISDN (Integrated Services Digital Network), ADSL (Asymmetric Digital Subscriber Line), CATV (Cable TV), or the like. Furthermore, the wireless AV station 101 is connected to various information processing apparatuses in the home via a wired or wireless network which forms the home network.

Each of the personal computers 103 to 105 serves as a client of the wireless AV station 101. The notebook type personal computers 103 and 104 have wireless communication devices, and can establish wireless connection to the wireless AV station 101. The desktop type personal computer 105 is connected to the wireless AV station 101 via a wired LAN.

The wireless AV station 101 connects the personal computers 103 to 105 to the Internet 12 to exchange data between Web sites on the Internet 12 and the personal computers 103 to 105.

An antenna cable connected to an outdoor TV broadcast reception antenna 11 is led indoors. The TV receiver 102 and wireless AV station 101 are connected to that antenna cable. Broadcast program data transmitted from a broadcasting station can be received and played back by the TV receiver 102, and can also be received by the wireless AV station 101. The wireless AV station 101 wirelessly transmits the received broadcast program data to the notebook type personal computers 103 and 104 via a wireless LAN. Or the wireless AV station 101 wirelessly transmits the received broadcast program data to the desktop type personal computer 105 via the wired LAN.

The wireless AV station 101 provides the following principal functions:
- Wireless router function:
   A wireless router function is a function of wirelessly connecting each information processing apparatus which can communicate with the wireless AV station 101 via the wireless LAN to the Internet 12, and exchanging data between Web sites on the Internet 12 and that information processing apparatus. The user can wirelessly browse the Internet anywhere in the home using the notebook type personal computer 103 or 104, which can be connected to the wireless AV station 101 via the wireless LAN.
- TV function:
   A TV function is a function of transmitting broadcast program data received by the wireless AV station 101 to each information processing apparatus connected to the wireless AV station 101 via the wireless or wired LAN. The user can view broadcast program data (live video), which is now on the air, anywhere in the home using the notebook type personal computer 103 or 104.
- TV video recording function:
   The wireless AV station 101 incorporates a magnetic disk drive device (hard disk drive; HDD) as a large-capacity storage device for recording broadcast program data. The wireless AV station 101 can wirelessly transmit broadcast program data, which is now on the air, to the information processing apparatuses, while recording that broadcast program data on the magnetic disk drive device as a file.
   Also, the wireless AV station 101 can wirelessly transmit broadcast program data which has already been recorded on the magnetic disk drive device to the information processing apparatuses, while recording another broadcast program data, which is now on the air, on the magnetic disk drive device. Furthermore, the wireless AV station 101 can output broadcast program data recorded on the magnetic disk drive device to the TV receiver 102.
- Contents server function:
   The wireless AV station 101 can transmit various contents such as broadcast program data and the like, which are recorded as files on the magnetic disk drive device, to the information processing apparatus as a request source in response to a data acquisition request from that information processing apparatus.
- Remote control function:
   The TV function, TV video recording function, and the like of the wireless AV station 101 can be remote-controlled by each of the personal computers 103 to 105. Also, the TV function, TV video recording function, and the like of the wireless AV station 101 can be controlled using a dedicated remote controller unit used to operate the wireless AV station 101. Furthermore, the wireless AV station 101 can be remote-controlled by a portable phone, personal computer, or the like via the Internet.

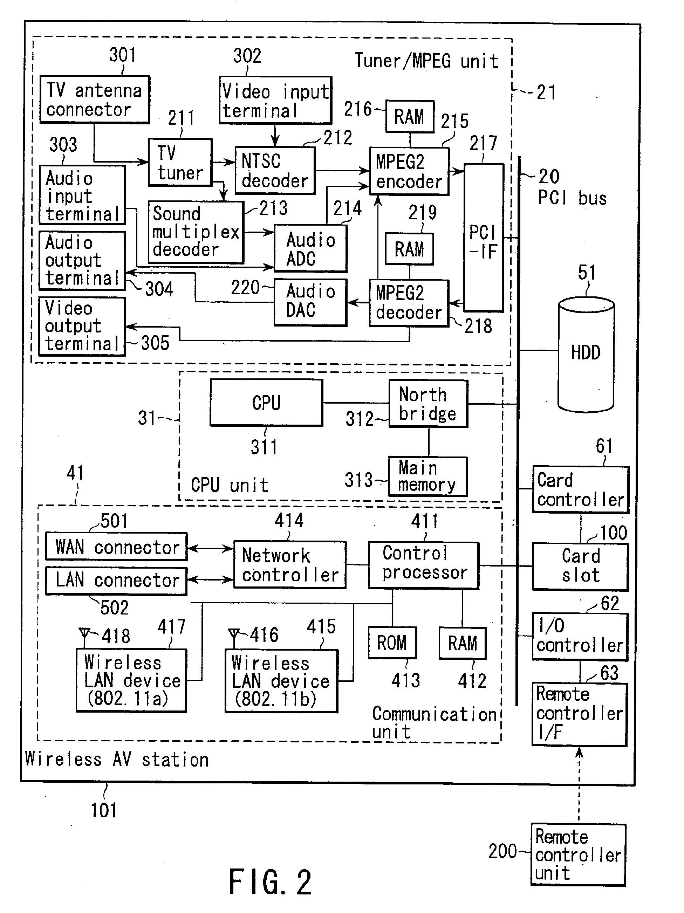

The arrangement of the wireless AV station 101 will be described below with reference to FIG. 2.

As shown in FIG. 2, the wireless AV station 101 roughly includes three major components, i.e., a tuner/MPEG unit 21, CPU unit 31, and communication unit 41.

These tuner/MPEG unit 21, CPU unit 31, and communication unit 41 are respectively connected to a bus 20 such as a PCI bus or the like. Also, a magnetic disk drive device (hard disk drive; HDD) 51 is connected to the bus 20.

The tuner/MPEG unit 21 executes a reception process of broadcast program data, an encode process for compression-encoding the received broadcast program data, a decode process for decoding the compression-encoded TV broadcast program data, and the like. As shown in FIG. 2, the tuner/MPEG unit 21 includes a TV tuner 211, NTSC (National TV Standards Committee) decoder 212, sound multiplex decoder 213, audio A/D converter (audio ADC) 214, MPEG2 encoder 215, RAM 216, PCI bus interface (PCI-IF) 217, MPEG2 decoder 218, RAM 219, audio D/A converter (audio DAC) 220, and the like.

The TV tuner 211 is connected to a TV antenna cable via a TV antenna connector 301. The TV tuner 211 is a device for receiving broadcast program data of a channel, which is designated by a viewing request from the personal computers 103 to 105 or a remote controller unit 200. The TV tuner 211 receives a TV broadcast signal and selects a channel on the basis of the viewing request. TV broadcast program data of a given channel, which is received by the TV tuner 211, is sent to the NTSC decoder 212, which separates the input TV broadcast program data into a video signal (moving picture) and audio signal. Furthermore, the separated signals undergo a conversion process into digital data as needed.

The NTSC decoder 212 is also connected to a video input terminal 302, and can receive video signals from external video devices such as a DVD (Digital Versatile Disc) player, VCR (Video Cassette Recorder), and the like. A sound multiplex signal superposed on the TV broadcast program data is decoded by the sound multiplex decoder 213, and is sent to the audio A/D converter (audio ADC) 214, which converts the input signal into digital data. The audio A/D converter (audio ADC) 214 is also connected to an audio input terminal 303, and can receive audio signals from external video/audio devices.

The MPEG2 encoder 215 executes an encode process for compression-encoding the input video and audio data. This encode process is executed according to the MPEG2 standards. The RAM 216 is used as a work memory of the encode process executed by the MPEG2 encoder 215. The broadcast program data, which is received by the TV tuner 211, is encoded by the MPEG2 encoder 215 to be converted into an MPEG2 stream.

The PCI bus interface (PCI-IF) 217 connects the tuner/MPEG unit 21 to the bus 20, and allows the tuner/MPEG unit 21 to communicate with the CPU unit 31 and HDD 51 via the bus 20. The PCI bus interface (PCI-IF) 217 incorporates registers which can be accessed by the CPU unit 31. The operations of the TV tuner 211 and MPEG2 encoder 215 are controlled in accordance with commands, which are set in the registers of the PCI bus interface (PCI-IF) 217 by the CPU unit 31.

The MPEG2 decoder 218 decodes the broadcast program data encoded in the MPEG2 format. For example, when encoded broadcast program data recorded on the HDD 51 is to be played back by the TV receiver 102, encoded TV broadcast program data, which is read out from the HDD 51, is sent to and decoded (decompressed) by the MPEG2 decoder 218 via the PCI bus interface 217. The RAM 219 is used as a work memory of the decode process executed by the MPEG2 decoder 218. The operation of the MPEG2 decoder 218 is also controlled by commands, which are set in the registers of the PCI bus interface (PCI-IF) 217 by the CPU unit 31.

Video data decoded by the MPEG2 decoder 218 is sent to the TV receiver 102 and the like via a video output terminal 305. Also, audio data decoded by the MPEG2 decoder 218 is converted into an analog signal as needed by the audio D/A converter (audio DAC) 220, and is then output to an external audio/video device Via an audio output terminal 304.

Furthermore, in this embodiment, broadcast program data decoded by the MPEG2 decoder 218 can be input to the MPEG2 encoder 215 again, and can undergo an encode process. This process is used to execute a down-convert process for converting the transmission rate (bit rate) of encoded broadcast program data which is recorded on the HDD 51 into a specific transmission rate corresponding to the frequency band of, e.g., the wireless LAN or the like.

More specifically, the transmission rate (bit rate) of encoded broadcast program data (MPEG2 stream) obtained by the encode process of the MPEG2 encoder 215 varies depending on the image quality (low image quality, standard image quality, high image quality) of broadcast program data to be recorded on the HDD 51. When high image quality is selected, the MPEG2 stream of broadcast program data having a very high transmission rate is recorded on the HDD 51. In this case, the MPEG2 stream of that broadcast program data cannot often be transmitted in real time in the frequency band of a wireless communication. In such case, a down-convert process for down-converting the transmission rate of the MPEG2 stream of broadcast program data to be wirelessly transmitted to a specific transmission rate for wireless transmission is executed.

The CPU unit 31 controls the TV tuner 211, MPEG2 encoder 215, and MPEG2 decoder 218 in the tuner/MPEG unit 21, and also controls data read/write accesses from/to the HDD 51. The CPU unit 31 receives commands associated with TV viewing transmitted from the personal computers 103 to 105 and transmits an MPEG2 stream of broadcast program data to be transmitted to the personal computers 103 to 105 to the communication unit 41 via communications with the communication unit 41. The CPU unit 31 includes a CPU 311, a north bridge 312 which connects a CPU bus of the CPU 311 and the PCI bus 20, and a main memory 313.

The communication unit 41 is a communication controller which can serve as a wireless LAN router by itself. The communication unit 41 can establish wireless connection to the personal computers 103 and 104, and is also connected to the personal computer 105 via the wired LAN. The communication unit 41 connects the personal computers 103 to 105 to the Internet 12 in response to requests transmitted from these personal computers 103 to 105, and exchanges data between the personal computers 103 to 105 and the Internet 12.
In this case, all data exchange processes between the personal computers 103 to 105 and Internet 12 are done within the communication unit 41, and the CPU unit 31 is not used.

As shown in FIG. 2, the communication unit 41 includes a control processor 411, RAM 412, ROM 413, network controller 414, two wireless LAN devices 415 and 417, WAN connector 501, LAN connector 502, and the like.

The WAN (Wide Area Network) connector 501 is a broadband terminal used to exchange data with the Internet 12. The connector 501 is connected to the communication line 13 via a modem or the like. The LAN connector 502 is connected to the wired LAN in the home.

The network controller 414 is a network control device which controls exchange of data with the Internet 12 via the WAN connector 501, and exchange of data with the home wired LAN via the LAN connector 502. The wireless LAN devices 415 and 417 are wireless communication devices which respectively exchange data with the personal computers 103 and 104 via the wireless LAN. These devices 415 and 417 wirelessly communicate with the personal computers 103 and 104 via corresponding antennas 416 and 418. The wireless LAN device 415 is configured to execute wireless communications complying with IEEE802.11b. The wireless LAN device 417 is configured to execute wireless communications complying with IEEE802.11a. Since the two wireless LAN devices 415 and 417 are equipped, wireless communications can be made using either IEEE802.11b or IEEE802.11a. The wireless LAN device used in a wireless communication is seamlessly switched in correspondence with the wireless communication standard supported by a client, which is wirelessly connected to the wireless AV station 101.

The control processor 411 controls the network controller 414 and wireless LAN devices 415 and 417 to control data exchange between the personal computers 103 to 105 and the Internet 12. More specifically, the control processor 411 includes an IP masquerade function, NAT (Network Address Translation) function, DHCP (Dynamic Host Configuration Protocol) function, and the like as those which are required to operate the communication unit 41 as a wireless router. Furthermore, the control processor 411 is connected to the PCI bus 20, and has a function of notifying the CPU 311 of requests (commands) or the like associated with TV viewing, which are received from the personal computers 103 and 104 via the wireless LAN device 415 or 417, and notifying the CPU 311 of requests (commands) or the like associated with TV viewing, which are received from the personal computer 105 on the wired LAN via the network controller 414.

Moreover, the control processor 411 has a function of transmitting, upon receiving broadcast program data transferred from the CPU 311 via the PCI bus 20, that broadcast program data to a personal computer as a request source via the wireless LAN device 415 or 417, or the network controller 414. In this case, the transmission process of the broadcast program data to the personal computer as the request source is executed parallel to data exchange between that personal computer and the Internet 12.

For example, when the personal computer 103 which can be wirelessly connected to the communication unit 41 is wirelessly browsing the Internet, and broadcast program data requested by that personal computer 103 is to be wirelessly transmitted to the personal computer 103, the control processor 411 controls the wireless LAN device 415 or 417 so that Web contents data received from a Web server on the Internet 12 and the broadcast program data encoded by the tuner/MPEG unit 21 are time-divisionally transmitted to the personal computer 103 via wireless communications. More specifically, the control processor 411 executes a process for multiplexing the Web contents data and encoded broadcast program data, and time-divisionally transmits the multiplexed Web contents data and encoded broadcast program data to the personal computer 103 via wireless communications. In this way, by sending the Web contents data and broadcast program data as independent data to the personal computer 103, the personal computer 103 can simultaneously display these Web contents data and broadcast program data using corresponding application programs. Also, the display positions and display sizes of windows used to display the Web contents data and broadcast program data can be freely changed by the corresponding application programs.

The aforementioned functions of the control processor 411 are implemented by firmware stored in the ROM 413.

Furthermore, the wireless AV station 101 has a card controller 61, I/O controller 62, remote controller interface 63, and the like. The card controller 61 controls accesses to a memory card inserted into a card slot 100 provided to the wireless AV station 101. The card controller 61 is used to, e.g., read out still picture data and audio data stored in the memory card, and to record them on the HDD 51.

The I/O controller 62 and remote controller interface 63 are used to receive remote controller codes which are transmitted from the remote controller unit 200 via infrared ray signals or the like. The received remote controller codes are sent to the CPU unit 31 via the bus 20.

The HDD 51 is used to record various contents such as broadcast program data, still picture data, audio data, and the like. The CPU 311 manages contents recorded on the HDD 51 as a contents database. The contents database stores additional information such as a program title name, channel number, song name, genre, artist name, and the like for each contents data recorded on the HDD 51. The CPU 311 provides the contents of the contents database onto the screen of the TV receiver 102 or to each information processing apparatus as a contents list menu in response to a command sent from the information processing apparatus or remote controller unit 200. The user can select desired contents data with reference to the contents list menu.

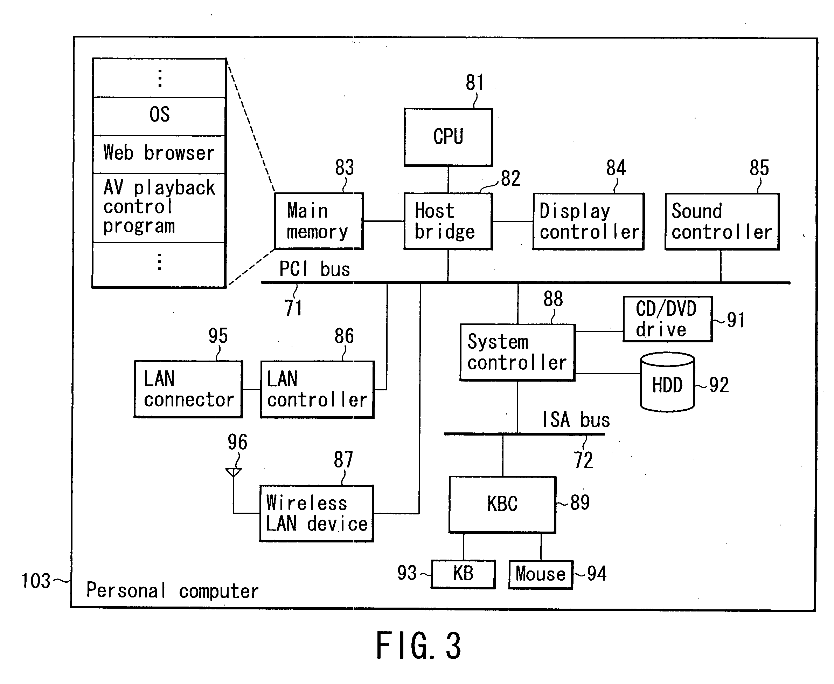

The arrangement of each information processing apparatus serving as a client will be described below with reference to FIG. 3. In this case, the notebook type personal computer 103 will be exemplified below.

As shown in FIG. 3, the personal computer 103 includes a PCI bus 71, ISA bus 72, CPU 81, host bridge 82, main memory 83, display controller 84, sound controller 85, LAN controller 86, wireless LAN device 87, system controller 88, keyboard controller (KBC) 89, CD/DVD drive 91, HDD 92, keyboard (KB) 93, mouse 94, LAN connector 95, and the like.

The CPU 81 is a processor for controlling the operation of the personal computer 103, and executes various programs such as an operating system (OS), Web browser, AV playback control program, and the like loaded onto the main memory 83. The AV playback control program is an application program used to play back audio/video data (AV data). The AV playback control program has a function of remote-controlling the wireless AV station 101, a function of playing back AV data such as TV broadcast program data, music data, and the like transmitted from the wireless AV station 101, and a function of downloading AV data such as TV broadcast program data, music data, and the like from the wireless AV station 101 as files. Also, the AV playback control program can play back AV data recorded on a recording medium such as a CD/DVD, which is reproduced by the CD/DVD drive 91.

The display controller 84 is a device for controlling a display monitor of the personal computer 103. The sound controller 85 is used as a sound source that outputs sounds corresponding to audio data.

The LAN controller 86 is a device for executing a communication with the wireless AV station 101 via the wired LAN. When the LAN connector 95 is connected to the wired LAN, the CPU 81 executes a communication with the wireless AV station 101 via the LAN controller 86.

The wireless LAN device 87 is a wireless communication device which exchanges data with the wireless AV station 101 via the wireless LAN. The wireless LAN device 87 wirelessly communicates with the wireless AV station 101 via an antenna 96. The wireless LAN device 87 is configured to make a wireless communication complying with IEEE802.11b or IEEE802.11a.

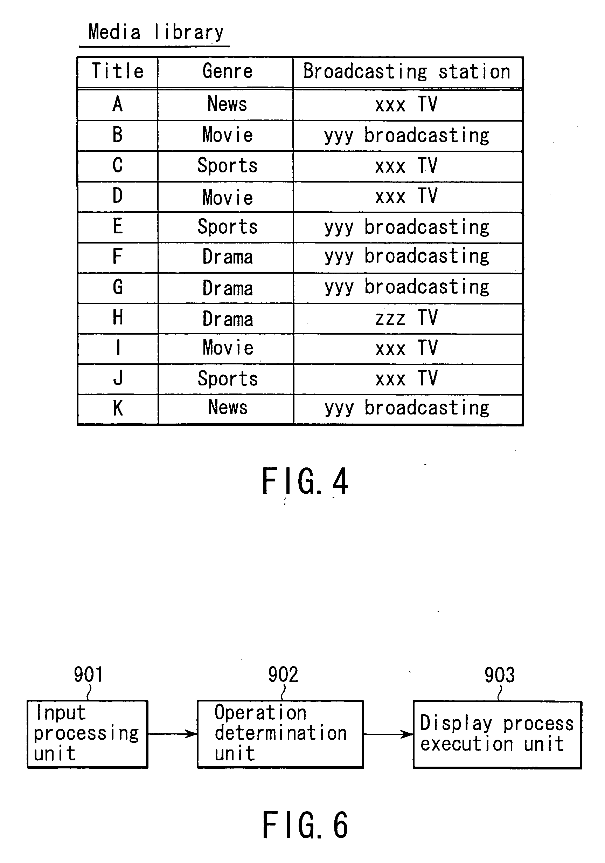

The configuration of a media library stored in a storage medium of the information processing apparatus of this embodiment will be described below with reference to FIG. 4.

A predetermined storage area of a storage medium of the aforementioned information processing apparatus (personal computers 103 to 105) stores a media library used to manage information of various contents video, music, photo) saved in the file format. The media library is formed as a list (table) of individual titles each having a "genre" field, "broadcasting station (name)" field, and the like.

In the example shown in FIG. 4, corresponding "genre" (one of news, movie, drama, and sports) and "broadcasting station" (one of xxx TV, yyy broadcasting, and zzz TV) are defined for each of individual titles A to K.

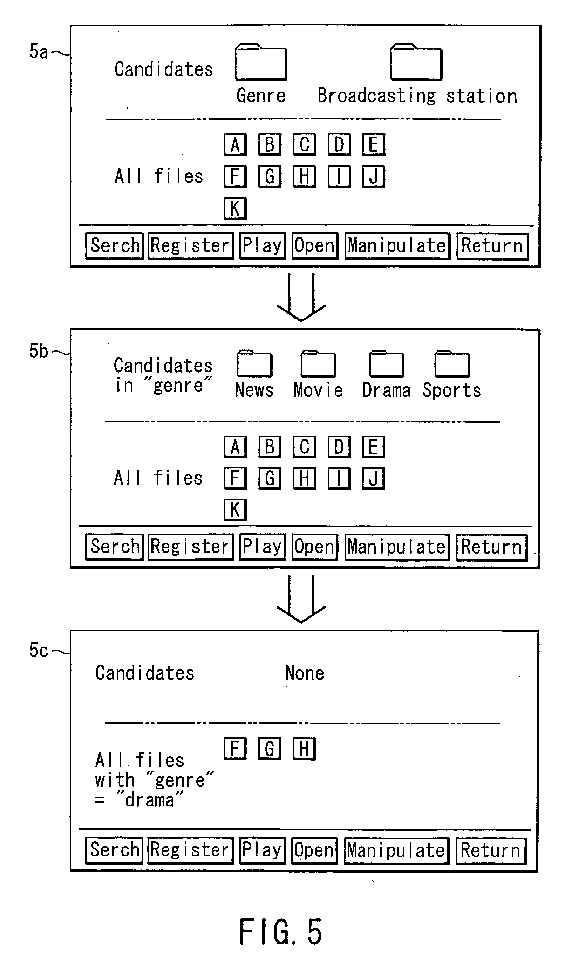

A contents operation window displayed on the display monitor of the information processing apparatus of this embodiment will be described below with reference to FIG. 5.

The aforementioned information processing apparatus is installed with application software (AV playback control program) used to play back various contents (video, music, photo, and the like). The contents operation window shown in FIG. 5 can be displayed by this application software. Note that various contents may be downloaded from the wireless AV station 101. In this embodiment, GUI control software used to control GUI-related parts on the contents operation window is installed.

Upon displaying the contents operation window on the screen for the first time, individual files (including a file which has thumbnail images) which include individual contents (i.e., titles A to K) stored in the storage medium are displayed on a first display area, and folders "genre" and "broadcasting station" representing categories used to classify these files are simultaneously displayed on a second display area as selective candidates (primary keys) in the form of icons, as shown in an operation window 5a of FIG. 5. Also, various contents operation buttons (icons) such as "search", "register", "play", "open", "manipulate", and "return" are displayed on a third display area in the lower portion of the operation window. The user can execute a corresponding process by pressing one of these buttons as needed.

A case will be examined below wherein the user designates the folder "genre" of the folders "genre" and "broadcasting station" as selective candidates (primary keys) and instructs to "open" that folder. Note that the designated folder "genre" includes categories "news", "movie", "drama", and "sports" (see FIG. 4). In this case, the operation window 5a is switched to an operation window 5b. That is, on the second display area, the folders "genre" and "broadcasting station" which are displayed so far are cleared, and four folders indicating "news", "movie", "drama", and "sports" as selective candidates ("genre" keys) in "genre" are displayed instead. At this time, the folder "broadcasting station" which is not designated is not displayed. Also, the state on the first display area remains unchanged.

A case will be examined below wherein the user further designates the folder "drama" of the folders "news", "movie", "drama", and "sports" as selective candidates ("genre" keys), and instructs to "open" that folder. In this case, the operation window 5b is switched to an operation window 5c. That is, the files corresponding to titles A to K and folders "news", "movie", "drama", and "sports", which are displayed so far, are cleared, and all files F to H whose "genre" = "drama" are displayed on the first display area instead. At this time, files which do not match "drama" are not displayed. Also, since there are no more candidates in the designated folder "drama", no folder is displayed on the window.

In this way, as the user selects candidates in turn, folders other than the target folder or files other than target files are not displayed. For this reason, the user can easily recognize objects to be selected.

FIG. 6 is a block diagram showing the functional arrangement of the GUI control software used to control GUI-related parts on the contents operation window.

The GUI control software includes an input processing unit 901, operation determination unit 902, and display process execution unit 903.

The input processing unit 901 controls input processes of a pointing device and keyboard with respect to the window. The operation determination unit 902 determines the operation contents based on the contents of the input processes. The display process execution unit 903 executes the display process of corresponding folders and files in accordance with the determination result of the operation determination unit 902.

The operation of the GUI control software of this embodiment will be described below with reference to the flow chart of FIG. 7.

In case of an information processing apparatus as shown in FIG. 5, the CPU 81 executes processing for display control in accordance with the GUI control software.

The CPU 81 reads out information of the media library out from the database in the storage medium in accordance with a user's instruction, and displays a plurality of folders as selective candidates that represent categories and all files on the contents operation window (step S1).

Upon detection of a user's input operation, the CPU 81 checks the operation contents (step S2). If the user designates one of the plurality of folders as selective candidates and instructs to open that folder (Yes in step S3), the CPU 81 checks if the designated folder includes a plurality of another selective candidates (step S4).

If the designated folder includes a plurality of another selective candidates (Yes in step S4), the CPU 81 switches the current display contents to those of the plurality of another selective candidates and corresponding files (step S5). After that, the CPU 81 repeats the process from step S3.

On the other hand, if the designated folder has no more selective candidates (No in step S4), the CPU 81 switches the current display contents to those of files contained in the folder designated in step S3 (step S6). If an operation (play or the like) to a given file is made (Yes in step S7), the CPU 81 executes the corresponding process for that file (step S8). If an operation other than that for a file is made, the CPU 81 executes another process (step S9).

If the operation contents are not designation of a file as a selective candidate in step S3 (No in step S3), but if the operation contents indicate an operation (play or the like) to a given file is made (Yes in step S7), the CPU 81 executes the corresponding process for that file (step S8). If an operation other than that for a file is made, the CPU 81 executes another process (step S9).

As described above, according to this embodiment, as the user selects candidates in turn, folders other than the target folder or files other than target files are not displayed. For this reason, the user can easily recognize objects to be selected.

As described above, according to the present invention, it is possible to improve usability in selecting target contents information.

## Claims

1. An information processing apparatus, **characterized by** comprising:
means (903) for displaying a plurality of saved files and a plurality of folders representing categories which classify the plurality of files on a window (5a);
means (901 to 903) for selecting one of the plurality of displayed folders;
means (901 to 903) for clearing the plurality of folders and the plurality of files which are displayed; and
means (901 to 903) for displaying a plurality of another folders as selective candidates in a category represented by a selected folder and the plurality of files (5b).

2. The apparatus according to claim 1, **characterized in that** one or more folders, which are not selected, of the plurality of folders are not displayed.

3. The apparatus according to claim 2, **characterized by** further comprising:
means (901 to 903) for further selecting one of the plurality of another folders;
means (901 to 903) for clearing the plurality of another folders and the plurality of files which are displayed; and
means (901 to 903) for displaying one or more files corresponding to a category represented by a further selected folder (5c).

4. The apparatus according to claim 3, **characterized in that** the other files which do not correspond to the category represented by the further selected folder are not displayed.

5. The apparatus according to any one of claims 1 to 4, **characterized in that** the means (903) for displaying includes displaying the folders together with character strings which represent the categories.

6. The apparatus according to any one of claims 1 to 4, **characterized in that** the means (903) for displaying includes displaying the folders on a first display area on the window and displaying the files on a second display area on the window.

7. The apparatus according to any one of claims 1 to 4, **characterized in that** the plurality of files include a file having a thumbnail image.

8. A display control method, **characterized by** comprising:
displaying a plurality of saved files and a plurality of folders representing categories which classify the plurality of files on a window (S1);
causing to select one of the plurality of displayed folders (S2, S3); and
clearing the plurality of folders and the plurality of files which are displayed, and displaying a plurality of other folders as selective candidates in a category represented by a selected folder and the plurality of files, when one of the.plurality of displayed folders is selected (S5).

9. The method according to claim 8, **characterized in that** one or more folders, which are not selected, of the plurality of folders are not displayed.

10. The method according to claim 8, **characterized by** further comprising:
causing to further select one of the plurality of another folders (S4); and
clearing the plurality of other folders and the plurality of files which are displayed, and displaying one or more files corresponding to a category represented by a further selected folder, when one of the plurality of another folders is further selected (S6).

11. The method according to claim 10, **characterized in that** the other files which do not correspond to the category represented by the further selected folder are not displayed.

12. The method according to any one of claims 8 to 11, **characterized in that** the displaying includes displaying the folders together with character strings which represent the categories.

13. The method according to any one of claims 8 to 11, **characterized in that** the displaying includes displaying the folders on a first display area on the window and displaying the files on a second display area on the window.

14. The method according to any one of claims 8 to 11, **characterized in that** the plurality of files include a file having a thumbnail image.
